# EUROPEAN PATENT APPLICATION

(11) **EP 2 280 385 A2**
(43) Date of publication of application: **02.02.2011**
(21) Application number: 10154350.2
(22) Date of filing: 23.02.2010
(51) Int. Cl.: G08G 1/123

(54) **System and method for arranging a meeting time for a commuter with a transit system**

(30) Priority: 06.07.2009 US 459739
(71) Applicant: Mitel Networks Corporation, Ottawa, Ontario K2K 2W7 (CA)
(72) Inventor: Erb, Paul Andrew, Ottawa, Ontario K1N 6M5 (CA)
(74) Representative: Derry, Paul Stefan

(57) **Abstract**

A system and method for arranging a meeting time for a commuter with a transit system is disclosed. The method includes communicating the commuter's travel path, advance notification time, and contact information to the transit system. The commuter is informed via the commuter's contact information of an estimated arrival time for a transit vehicle in the transit system at a selected stop on the commuter's travel path. This enables the commuter to arrive at the selected stop based on the estimated arrival time. A transit vehicle driver is notified when the commuter has arrived at the transit vehicle on the commuter's travel path. The transit driver can then proceed with the commuter on the transit vehicle.

## Description

### Background

A typical commute for mass transit users involves arriving at a transit location, such as an airport, bus station, or bus stop, with sufficient time to board the transit vehicle. This often involves waiting an unpredictable amount of time for the transit vehicle to arrive. Most mass transit systems use an array of business models and technologies to maximize the number of on-time arrivals of their transit vehicles. However, the natural chaotic nature of travel creates an inherent amount of unpredictability in the arrival time.

For example, in air travel, the interconnectedness of air travel routes and airports can create delays even on days with good weather. In stormy seasons, weather caused delays may occur in the morning in one part of the country or world that can cause a ripple effect for on-time arrivals throughout the day.

In ground transportation, bus drivers are at the mercy of traffic conditions. When their designated travel route becomes clogged due to congestion or traffic accidents, there is little that the bus driver can do to meet the scheduled bus stops. The delays can add up to hours of wasted time for commuters.

Alternatively, traffic flow may proceed at an unexpectedly high rate, causing the bus driver to be slightly ahead of schedule on certain days. Those commuters that grow used to delays and typically arrive after the designated time for their stop can be caught off guard and miss their bus on days when transit system is functioning as it should. This can be even more irritating to a commuter.

The inherent unpredictability in mass transit systems is one of the main contributors to people's hesitancy to using such systems. Where possible, most people enjoy the predictability of having their own source of transportation rather than having to rely on an often unreliable mass transit system.

### Brief description of the drawings

Features and advantages of the invention will be apparent from the detailed description which follows, taken in conjunction with the accompanying drawings, which together illustrate, by way of example, features of the invention; and, wherein:
FIG. 1 depicts a method for arranging a meeting time for a commuter with a transit system in accordance with an embodiment of the present invention; and
FIG. 2 illustrates an example embodiment of a system for arranging a meeting time for a commuter with a transit system in accordance with an embodiment of the present invention.

Reference will now be made to the exemplary embodiments illustrated, and specific language will be used herein to describe the same. It will nevertheless be understood that no limitation of the scope of the invention is thereby intended.

### Detailed description of example embodiments

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification are labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

### Definitions

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

### The invention

Mass transit systems are typically the most energy efficient means of travelling to a selected location, especially in high density urban environments. However, the inherent unpredictability in mass transit schedules can discourage the public from using mass transit systems. To limit this unpredictability and increase the usage of mass transit systems, a system and method for arranging a meeting time with a transit system are disclosed.

Used herein, "driver" refers to the operator of a mass transit vehicle, such as a bus. Although conveniently referred to as a person, "driver" is intended to broadly encompass person, robots, computing devices and any other means for operating a mass transit vehicle.

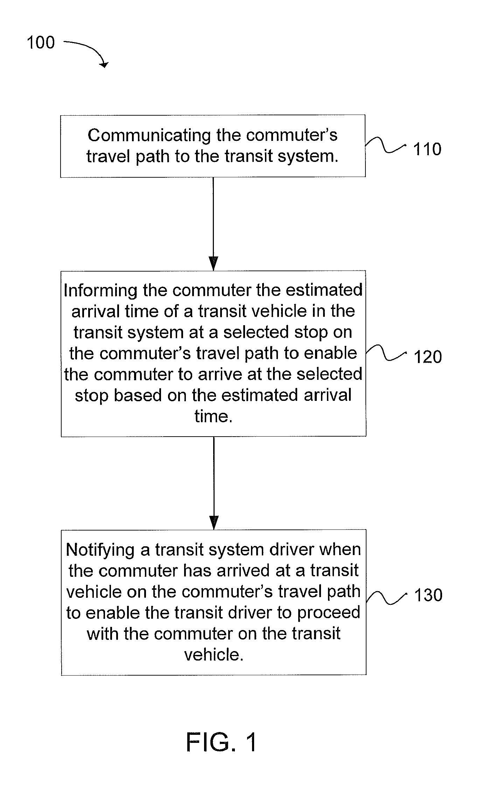

A method 100 for arranging a meeting time for a commuter with a transit system is depicted in the flow chart of FIG. 1. The method includes the operation of communicating 110 a commuter's information comprising the commuter's travel path, advance notification time, and contact information to the transit system. The transit system can be contacted by a commuter, or a representative of the commuter. This may be accomplished via a person to person telephone call. Alternatively, in order to more efficiently handle the large number of persons using a transit system, an electronic means for communicating a commuter's travel path information can be used.

Electronic means for communicating the commuter's travel path include a text message, an email, a pager device, or the use of a graphical user interface available on a computing device that is designed to obtain the desired information from a commuter. For example, a commuter may log onto a website provided by the transit system, enter the commuter's information into a graphical user interface provided by the website, and send the information to a computer system used by the transit system (or a third party) to operate a reservation system.

In another embodiment, a commuter can provide information to the transit system via communication systems available through the transit system. For example, when boarding a bus that the commuter uses to travel to his or her work place each day, the commuter can simply request a reservation notification from the bus driver. The bus driver may send the information to a selected person in the transit system (or a third party) using the bus system's computer or radio communication equipment.

Some transit systems have been highly automated, using equipment such as smart cards and smart card readers. A smart card can be used to store personal information pertaining to the commuter, such as the commuter's contact information. Additionally, the smart card can be used to identify the commuter's travel path and advance notification times. A commuter can use an automated system such as an electronic kiosk at a transit system location, or on a transit system vehicle, to communicate the commuter's travel path and advance notification time to the transit system. Contact information for the commuter can also be provided. The contact information may be a phone number, an email address, or another means of contacting the commuter.

In one embodiment, the commuter can use a voice communication device, such as a wired telephone or cellular telephone to contact an automated system. For example, a Mitel® Communications Directory system using interactive voice response (IVR) technology can be used to enable the commuter to enter the necessary information to arranging a meeting time for the commuter with the transit system.

The method 100 further comprises the operation of informing 120 the commuter of the estimated arrival time of a transit vehicle in the transit system at a selected stop on the commuter's travel path. The estimated arrival time of the transit vehicle can be communicated to the consumer at a selected time using the consumer's advance notification time. This information can enable the commuter to arrive at the selected stop based on the transit vehicle's estimated arrival time, rather than a static fixed time. This can substantially reduce the frustrations of a commuter that are associated with the inherent unpredictability of a mass transit system.

The estimated arrival time can be projected based on near real-time knowledge of the transit vehicle's location. For example, a transit system can track their transit vehicles' locations using an automated means such as through a global positioning system (GPS) receiver mounted in each vehicle. The location information from the GPS can be communicated to the transit system via a wireless link. This information can then be used to inform the commuter, via the commuter's contact information, of the estimated arrival time of the transit vehicle.

The estimated arrival time can also be determined through the use of a statically configured bus schedule, a dynamically configured bus schedule that is updated periodically, a dynamically configured bus schedule that is adjusted by GPS tracking of the transit vehicles, or an interface to an external component on which the bus schedule is managed. Estimated arrival time can also be improved through the use of historical bus arrival data and/or bus driver data. In addition, historical and/or current traffic data can be used to determine predicted transit vehicle arrival times.

In one embodiment, the commuter can be informed of the estimated arrival time of the transit vehicle at a selected advance notification time. For example, the commuter may typically get off work at 5:00 PM. The commuter's bus may be scheduled to arrive at a bus stop that is a block away at 5:18 PM. The commuter can communicate to the reservation system that he or she would like to be informed of the bus's estimated arrival time at 5:00 PM. The commuter can be informed of the estimated arrival time via an electronic communication from the transit system (or a third party) to a communication device used by the commuter. The communication device may be a computer, a mobile computing device, a cell phone, a pager, or other type of communication device capable of receiving the electronic communication from the transit system. The transit system can send the communication via a voice message over a telephone, a text message, an email, a page sent to a paging device, or digital data communicated to a computing device. Alternatively, the advance notification time may be a number of minutes before the estimated arrival time. For example, fifteen minutes in advance would mean the commuter would typically be informed at around 5:03 PM, depending on the actual arrival time of the vehicle.

The commuter can then use the estimated arrival time to make an educated decision about when to travel to the transit stop used by the commuter. The closer that the estimated arrival time is received relative to the transit vehicle's scheduled arrival time, the more accurate the estimated time is expected to be. For example, at 4:00 PM, an inquiry by the commuter into the bus's schedule may result in information from the transit system that the bus is operating on time. However, by 5:00 PM, the automatically received scheduling information may inform the commuter that the bus is estimated to arrive at 5:20 PM.

If the estimated arrival time information changes by more than a set amount, such as 3 minutes, the commuter can be sent an additional message informing the commuter of the additional delay. For example, at 5:10 PM the commuter may receive a second notification that the bus's estimated arrival time at the transit stop used by the commuter has changed from 5:18 PM to 5:25 PM. The commuter may take this extra time to stop and make a purchase at a store along the way to the transit stop.

The term "estimated arrival time" can also be used to infer the estimated departure time. In some types of transit systems, the estimated arrival time and the estimated departure time can occur within seconds or minutes of each other. For example, a bus used for public transit during a commute may pull up to a stop, allow people to enter and exit, and depart the stop within a relatively short period. For this type of transit system, the estimated arrival time is critical to the commuter. In other types of transit systems, such as air travel, the estimated departure time, or estimated seating time may be more critical, since an airplane may actually arrive at the gate well in advance of its departure. As used herein, the term "arrival time" is intended to be synonymous with the time at which commuters are allowed to take their seat on the transit system vehicle.

The method 100 further comprises the operation of notifying 130 a transit vehicle driver when the commuter has arrived at the transit vehicle on the commuter's travel path. Notifying the transit vehicle driver can enable the transit driver to proceed once the commuter is on board the transit vehicle. The transit vehicle driver can be notified that the commuter has arrived, or is en-route to the transit vehicle via a communication from the commuter. The communication may be an electronic communication such as a telephone call. The telephone call may be placed to the transit system driver or the transit system. Interruptions to the driver can be limited by enabling the message to be sent to an electronic system, such as a computer server system established by the transit system. The computer server system can use IVR technology, as previously discussed. The information sent to the server can then be forwarded to the transit vehicle driver in an electronic format, such as on a video display, or through an automated telephone call from the IVR server.

In another embodiment, the commuter may be able to respond to the communication from the transit system, such as replying to a text message, a page, or an email. Alternatively, an automated electronic message may be generated when the commuter arrives at the commuter's transit stop or transit vehicle. For example, a wireless message may be generated and sent to a receiver at the transit stop or transit vehicle, thereby notifying the transit system driver that the commuter has arrived. This will be discussed more fully below.

In one embodiment, the transit vehicle driver can be instructed to wait for a set amount of time for a commuter that has arranged a meeting time with the transit system. For example, if the commuter has not sent a notification to the transit system driver that he or she has arrived at the transit vehicle, the transit vehicle driver may be instructed to wait for the commuter for a predetermined grace period, such as for three additional minutes. The amount of time that the transit vehicle driver will wait can be previously agreed upon between the consumer and the transit system.

The privilege of having the transit vehicle wait for a selected grace period may be purchased in advance by the commuter. A specialized ticket or pass that includes the grace period can be provided for a set cost by the transit system. To discourage commuter's from abusing the grace period, an additional fee may be charged to the commuter if the commuter does not arrive on time and the transit vehicle driver is forced to wait for the commuter. In addition, the grace period may be decreased or done away with altogether for the commuter if it is needed more than a set number of times during a selected period, such as twice in a one month period. For instance, in a one month period, a commuter may be given a 3 minute grace period a first time the commuter is tardy, a 2 minute grace period the second time the commuter is tardy, and a 1 minute grace period for a third time the commuter is tardy. Additional tardiness will not result in the transit vehicle driver waiting for the commuter.

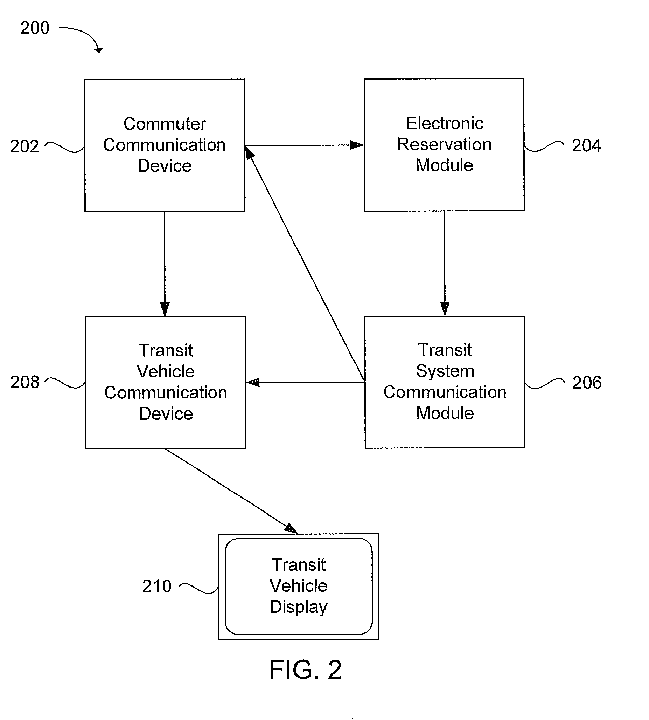

FIG. 2 provides an example illustration of a system 200 for arranging a meeting time for a commuter with a transit system. The system includes a commuter communication device 202. The commuter communication device is operable to communicate a commuter's information comprising the commuter's travel path, advance notification time, and contact information to an electronic reservation module 204. The advance notification time may be a set time, such as 5:00 PM in the previous example, or a specific period before the transit vehicle's arrival, such as 15 minutes prior to arrival. The electronic reservation module can confirm the transit system schedule and record the commuter's identity and reservation details for a selected transit stop. The electronic reservation module may operate on a computer server configured to receive the commuter's information. The electronic reservation module may be operated by a third party that is used by the transit system.

The information in the electronic reservation module 204 can be communicated to a transit system communication module 206. The transit system communication module is operable to communicate an estimated arrival time of a transit vehicle in the transit system at a selected stop on the commuter's travel path to the commuter based on the commuter's contact information, travel path, and advance notification time supplied. The transit system communication module can also operate on a computer server. In one embodiment, the electronic reservation module 204 and the transit system communication module 206 can operate on the same computer server.

A transit vehicle communication device 208 is operable to receive a communication from the commuter. The communication can instruct the transit vehicle driver that the commuter is en route or has arrived at the transit vehicle. This information can be displayed on a transit vehicle display 210, thereby enabling the transit vehicle driver to know when all commuters having reserved positions on the transit system have arrived. In addition, the driver can determine when a grace period for each commuter has passed, thereby enabling the driver to continue on his or her predetermined route once the grace period(s) have past. Grace periods may only be applicable for selected commuters using the reservation system.

In one example embodiment, the commuter communication device 202 can be a smart phone comprising a wireless telephone with a display and a microprocessor operable to enable selected computing programs to be operated on the smart phone. The commuter can send his or her travel path, advance notification time, and contact information to the electronic reservation module 204. This information can be used by the transit system communication module 206 to send the estimated arrival time to the commuter's smart phone via an electronic communication such as a text, an e-mail, or other type of electronic communication to the commuter's smart phone.

Based on the estimated arrival time of the transit vehicle that is received on the smart phone at a preselected time, the commuter can arrive at the transit stop. The transit stop can be configured with a transit vehicle communication device 208 capable of receiving a message, such as an automated message that the commuter has arrived. In one embodiment, the automated message can be a wireless message sent from the commuter's smart phone. For instance, the smart phone may be configured to communicate via IEEE 802.11, IEEE 802.15, Bluetooth, through radio frequency identification (RFID), or another wireless technology. When the smart phone is within the proximity of the transit vehicle communication device 208, the smart phone can be configured to automatically communicate that the commuter has arrived. In one embodiment, the electronic reservation device can create a commuter identity value unique to the commuter. This value can then be automatically (or manually) communicated to the transit vehicle communication device to inform the transit vehicle driver of the commuter's arrival.

Alternatively, the transit vehicle communication device 208 may be located on the transit vehicle. When the commuter is near the vehicle, or when he or she boards the vehicle, the commuter's smart phone can communicate with the transit vehicle via a wireless communications link to the transit vehicle communication device to inform the vehicle driver that the commuter has arrived. The transit vehicle display 210 can be automatically updated to show that the commuter has arrived, allowing the transit vehicle driver to proceed on his or her route.

In another example, a commuter can make use of the reservation system 200 by placing a phone call to a published phone number to access the electronic reservation module 204. The reservation module can be configured to recognize the commuter's caller ID and access the commuter's pre-configured identification information. This may include the commuter's travel path, advance notification time, and contact information. If the caller ID is not recognized, or if any information is lacking, that data can be entered by the commuter. In one embodiment, the electronic reservation module 204 can be configured to operate with Interactive Voice Response (IVR) technology. For example, a Mitel® Communications Directory system using IVR technology can be used to enable commuters to arrange a meeting time with a transit system.

For example, the commuter can use IVR to enter the desired bus stop, 7988, and the desired scheduled bus time, 16:24. The electronic reservation module 204 can confirm that the selected stop and time are in the configured bus schedule. If the time is not scheduled, a different time may be identified by the module for confirmation by the commuter via the telephone connection.

Once the commuter has confirmed the bus stop and bus arrival time, the electronic reservation module 204 can confirm the commuter's contact preference and advance notification time that will be used. For example, the commuter's work phone number may be used to contact the commuter with an advance notification time of 12 minutes, thereby creating a reservation. The reservation is stored in the electronic reservation module 204, along with the commuter identity, the bus stop, the scheduled bus arrival time, and the advance notification time. The reservation can then be activated and a timed reminder can be established by the system.

At approximately 12 minutes before the bus is scheduled to arrive at the bus stop, a phone call is placed to the contact number at the commuter's work phone. An IVR program operating on at least one of the electronic reservation module 204 and transit system communication module 206 can provide a voice message detailing the bus stop and scheduled bus arrival time, along with the estimated bus arrival time if it is different from the scheduled time. An option can be given to the commuter to confirm or clear the reservation. The commuter can confirm the reservation and close down his work station to get ready to leave.

When the bus driver arrives at the bus stop, the driver can call a predetermined phone number to access the system 200. The system can recognize the caller ID of the bus driver's telephone. The system can use the configured bus schedule and the last known bus stop to determine the current bus stop and scheduled bus arrival time. If the bus driver identity cannot be determined from the caller ID, the bus driver can be requested to enter a predetermined identification number. The IVR program can provide the bus stop and scheduled bus arrival time. An option can be given to confirm or change the information.

The bus driver can confirm the information and the electronic reservation module 204 can check for pending reservations at the current bus stop and scheduled bus arrival time. The IVR can identify the outstanding reservations and provide the commuter identities for the commuter, along with other commuters using the system. The bus driver can then wait at least a pre-determined grace period after the scheduled or estimated bus arrival time at the selected stop.

The commuter can arrive at the bus and use his or her cell phone to clear the reservation. The system can call the contact number for the bus driver and the IVR can be used to indicate that the reservation is cleared, freeing the bus driver to proceed to the next stop after each reservation is cleared.

Alternatively, after the grace period, the driver can call the system to clear the reservation if the commuter arrived, or to mark the reservation as incomplete if the commuter did not arrive within the grace period. If the reservation is incomplete, the transit system communication module 206 can call the contact number for the commuter and identify the reservation as incomplete using the IVR.

The system 200 and method 100 can be similarly used to plan more complex routes, such as the use by a commuter of multiple busses, or a transfer from a bus to a light rail or commuter rail operated by one or more transit systems. The system can confirm and store multiple reservations to handle different segments of a single trip, accounting for the connection times. In the event a commuter's previous transit vehicle has been delayed, a transit vehicle driver can be instructed to wait via the transit system communication module 206 if the delay is less than a certain time period, such as 5 minutes. Additionally, the system can also manage reservations that are on different days than the request is placed and for automatically repeating reservations, such as once every week day, or once a week.

Usage data from the electronic reservation module 204 and/or the transit system communication module 206 can be stored and used by the transit system to recommend schedule changes within the system. Additionally, the information may be used to recommend behavior changes or withdraw the service from consistently negligent commuters.

While the above examples have been directed to examples for use of the system and method for reserving a position on a transit system with respect to a transit system bus, the system can also be applied to other types of transit systems such as air travel and travel by train, car pooling, taxi service, and other types of transit services.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for arranging a meeting time for a commuter with a transit system, comprising:
communicating the commuter's travel path, an advance notification time, and a contact information to the transit system;
informing the commuter, via the commuter's contact information, of an estimated arrival time for a transit vehicle in the transit system at a selected stop on the commuter's travel path to enable the commuter to arrive at the selected stop based on the estimated arrival time;
notifying a transit vehicle driver when the commuter has arrived at the transit vehicle on the commuter's travel path to enable the transit driver to proceed with the commuter on the transit vehicle.

2. The method as in claim 1, wherein communicating the commuter's travel path further comprises providing the commuter's travel path electronically to a computer system to enable the commuter's travel path in the transit system to be identified and located.

3. The method as in claim 0, wherein communicating the commuter's travel path further comprises sending the commuter's travel path information comprising the commuter's travel path, advance notification time, and contact information to the computer system through a communication means selected from the group consisting of a telephone voice call, a text message, an email, a graphical user interface, a pager device, a bus radio, and a smart card.

4. The method as in claim 0, further comprising communicating the commuter's travel path information to the computer system via a server operable with interactive voice response technology.

5. The method as in any preceding claim, further comprising generating a commuter identity value used to link the commuter with the commuter's travel path in the computer system.

6. The method as in any preceding claim, wherein informing the commuter further comprises:
communicating a selected time at which the commuter desires to be informed of the estimated arrival time for the transit vehicle, and/or
providing an additional notification to the commuter when the estimated arrival time of the transit vehicle changes by more than a set amount of time, and/or
sending the estimated arrival time of the transit vehicle in the transit system at the selected stop to a smart phone used by the commuter.

7. The method as in any preceding claim, further comprising informing the commuter the estimated arrival time using the contact information, wherein information pertaining to the estimated arrival time is directed to a communication device using a communication means selected from the group consisting of a voice message over a telephone, a text message, an email, a page sent to a paging device, and digital data communicated to a computing device.

8. The method as in any preceding claim, wherein notifying the transit system driver when the commuter has arrived at the transit vehicle further comprises:
placing a telephone call to at least one of the transit driver and the transit system, or
sending an automated electronic message to a transit system receiver to inform the transit driver that the commuter has arrived, and optionally further comprising sending the automated electronic message using a wireless means selected from the group consisting of an IEEE 802.11 enabled device, an IEEE 802.15 enabled device, a Bluetooth enabled device, and a radio frequency identification enabled device.

9. The method as in any preceding claim, further comprising displaying a list of commuters having a reserved position for the transit driver to see at each stop.

10. The method as in any preceding claim, further comprising providing a grace period for the commuter when the transit driver has not been notified that the commuter has arrived at the transit vehicle.

11. The method as in claim 10, further comprising decreasing the grace period time when the commuter fails to arrive at the transit vehicle during a previous grace period.

12. The method as in claim 10, further comprising increasing a cost to the commuter to obtain the grace period when the commuter fails to arrive at the transit vehicle during a previous grace period.

13. The method as in claim 10, further comprising providing the grace period for selected customers based on at least one of the customer's identification, ticket class, ticket price, and contractual agreement.

14. A system for arranging a meeting time for a commuter with a transit system, comprising:
a commuter communication device operable to communicate a commuter's information comprising the commuter's travel path, advance notification time, and contact information to an electronic reservation module;
a transit communication module operable to communicate an estimated arrival time of a transit vehicle in the transit system at a selected stop on the commuter's travel path to the commuter based on the commuter's information; and
a transit vehicle communication device operable to receive a communication from the commuter that the commuter is en route or has arrived at the transit vehicle.

15. The system as in claim 14, further comprising a display mounted in the transit vehicle, wherein the display shows a transit system operator whether a commuter having a reservation has arrived at the transit vehicle, and optionally wherein the display is configured to show a grace period after the transit vehicle's arrival time during which an operator of the transit vehicle will wait for the commuter to arrive.
